# EUROPÄISCHE PATENTSCHRIFT

(11) **EP 1 945 545 B1**
(45) Veröffentlichungstag und Bekanntmachung des Hinweises auf die Patenterteilung: **13.01.2010**
(21) Anmeldenummer: 06818362.3
(22) Anmeldetag: 03.11.2006
(51) Int. Cl.: B65G 63/02, B61D 47/00, B60P 1/64

(54) **MOBILES UMSCHLAGGERÄT**
MOBILE HANDLING UNIT
APPAREIL MOBILE DE TRANSBORDEMENT

(30) Priorität: 04.11.2005 AT 18012005
(43) Veröffentlichungstag der Anmeldung: 23.07.2008
(73) Patentinhaber: Unseld, Hans G., 1080 Wien (AT)
(72) Erfinder: Unseld, Hans G., 1080 Wien (AT)
(74) Vertreter: Krause, Peter
(86) Internationale Anmeldenummer: PCT/EP2006/010558
(87) Internationale Veröffentlichungsnummer: WO 2007/051631

(56) Entgegenhaltungen:
- WO-A2-99/25582
- FR-A1- 2 670 762

## Beschreibung

Die Erfindung betrifft ein mobiles Umschlaggerät zum längsseitigen Um- und/oder Verladen einer Ladeeinheit, insbesondere eines Containers oder einer Wechselbrücke, wobei die Um- bzw. Verladebewegung der Ladeeinheit über mindestens eine, unter der Ladeeinheit positionierbare, bewegbare Platte erfolgt, gemäß dem Oberbegriff des Anspruch 1, wie aus FR 2 670 762 A1 bekannt.

Ein Kennzeichen der Globalisierung der Wirtschaft ist der nahezu ungebremste Ausbau der Transportkapazitäten, genauer das von Jahr zu Jahr steigende Transportvolumen. Ohne ungehinderten, effizienten und kostengünstigen Transport der Waren von A nach B ist eine prosperierende Wirtschaft weder lokal noch global denkbar.

Das Gütertransportvolumen verteilt sich vollkommen ungleichmäßig auf den Straße- und Bahntransport, auf den Transport mit Schiffen sowie die Luftfracht, wobei mit Abstand der größte Teil der Waren auf der Strasse transportiert wird.

Der derzeitige Warentransport hat trotz Computerzeitalter eine gravierende Schwachstelle. Muss bei einem Gütertransport das Transportmedium gewechselt werden, das heißt, muss die Ladeeinheit umgeladen werden beispielsweise vom Schiff auf einen Waggon oder Lastkraftwagen (LKW), sind enorme logistische Probleme zu lösen. Sowohl die Transportkosten als auch die Transportdauer ist sehr wesentlich davon abhängig, wie diese Logistikprobleme gelöst werden.

Beim Straßentransport wird diese Schwachstelle umgangen. Im Normalfall werden die Waren beim Versender mit den firmeneigenen Hebezeugen, wie beispielsweise einem Kran oder Hubstapler, aufgeladen und beim Empfänger, wieder mit den firmeneigenen Hebezeugen, abgeladen. Ein Umladen auf ein anderes Transportmittel ist dabei nicht notwendig. Das ist der Grund für die Dominanz des Straßentransportes. Im innerstädtischen Bereich und im Nahverkehr gibt es wegen der Verkehrsinfrastruktur leider keine vernünftige Alternative zum Straßentransport. Es haben zum Beispiel weder viele Absender der Waren noch die Empfänger einen Gleisanschluss.

Wegen der Probleme des Straßentransportes für die Allgemeinheit, sollte aber ab einer bestimmten Distanz zwischen Absender und Empfänger der Bahntransport eine Alternative zum Straßentransport sein. Die LKW beeinträchtigen wegen der Lärm- u. Schadstoffemissionen die Lebensqualität der Bewohner in den betroffenen Regionen erheblich und erhöhen die Schadstoffemissionen, die den Treibhauseffekt begründen.

Beim Bahntransport ist aber ein zweimaliges Umladen erforderlich: einmal müssen die Waren zum Bahnhof gebracht und vom LKW auf den Eisenbahnwaggon umgeladen werden und dann vom Zielbahnhof wieder abgeholt werden, das ein erneutes Umladen auf den LKW bedingt. Die Schwachstelle des Transportwesens kommt beim Bahntransport so lange voll zum Tragen, bis geeignete Umladevorrichtungen entwickelt und zur Verfügung gestellt werden können.

Auch bei anderen Transportmedien, wie beispielsweise dem Transport auf Schiffen ist der Umladevorgang - vom Land auf das Schiff und umgekehrt - der kritische Schritt auf dem gesamten Transportweg. Um in den Containerhäfen einen vernünftigen Durchsatz, das ist die Anzahl der umgeladenen Ladeeinheiten pro Zeiteinheit, sicherstellen zu können, sind enorme Investitionen in Infrastruktur und Hebezeuge erforderlich.

Mit Umladevorrichtungen, die rasch, sicher und preisgünstig die Waren von einem Transportmedium auf ein anderes umladen können, etwa vom Schiff auf Eisenbahnwaggons oder LKW und umgekehrt, müsste die vorhandene Schwachstelle beseitigbar sein. Mit dem Einsatz von Transportbehältern, wie Container oder Wechselaufbauten beim LKW, in denen sich die zu transportierenden Waren befinden, wie beispielsweise Stückgut, das nicht mehr einzeln umgeladen werden muss, wurde ein Schritt in die richtige Richtung gemacht. Trotzdem blieb die Schwachstelle bis heute im Wesentlichen bestehen.

Es hat daher bis heute zahlreiche Entwicklungen gegeben, den Umladevorgang durch geeignete Einrichtungen so zu verbessern, dass der Durchsatz in den Containerhäfen erheblich gesteigert werden kann bzw. den Bahntransport attraktiver, das heißt kostengünstiger und schneller, zu gestalten.

Stand der Umladetechnik in den Containerhäfen ist, dass die Ladeeinheiten mit mehreren großen Portalkranen parallel vom Schiff gehoben und am Land abgestellt werden. Die abgestellten Ladeeinheiten werden dann mit sogenannten Straddlecarrier oder auch mit Reachstacker angehoben und zum Platz transportiert, wo sie zwischengelagert oder direkt am Eisenbahnwaggon bzw. am LKW abgeladen werden können. Dieses Verfahren hat allerdings den enormen Nachteil, dass für einen entsprechenden Durchsatz eine Vielzahl von sehr teuren Straddlecarriern oder Reachstacker benötigt werden. Je länger die Distanzen sind, die mit den Ladeeinheiten zurückgelegt werden, beispielsweise vom Aufheben beim Schiffsentladekran bis zum Ablegen am Eisenbahnwaggon oder LKW, umso unwirtschaftlicher sind die Hebezeuge eingesetzt. Hebezeuge sollen aufheben und nicht fahren, weil zum Fahren gibt es einfachere und billigere Möglichkeiten.

So werden zum Teil schon einfache Fahrzeuge, ähnlich Schwerlastanhängern aber mit Antriebsmotor, eingesetzt, die bodengeführt, beispielsweise über Induktionsschleifen, den Transport der Ladeeinheiten innerhalb des Betriebsgeländes ermöglichen. Diese "Automatic Guided Vehicles" (AGV) können zwar nur die vorgegebenen Strecken fahren, kosten dafür aber nur einen Bruchteil der Straddlecarrier bzw. Reachstacker. Dadurch kann der Durchsatz nicht wesentlich gesteigert werden, aber die erforderlichen Investitionskosten, insbesondere bei Erweiterungen, sind nicht so hoch. Der große Nachteil dabei ist aber, dass ein weiterer Umladevorgang entsteht. Die vom Entladekran auf die AGV's abgestellten Ladeeinheiten müssen von diesen auf die Eisenbahnwaggon oder LKW umgeladen bzw. am Boden zwischengelagert werden. Dafür sind wiederum die bekannten Umladevorrichtungen, wie beispielsweise Drehkräne, Straddlecarrier, Reachstacker usw. erforderlich. Eine wesentliche Durchsatzerhöhung ist mit dieser Technik nicht möglich.

Um der oben aufgezeigten Grundproblematik entgegenzuwirken, wurde bereits in der DE 197 33 963 C2 ein Verfahren und eine Vorrichtung zum Umschlagen von Ladung vorgeschlagen. Nachteilig bei dieser Vorrichtung ist vor allem, dass zum Handling der Container eigene Adapterplatten vorgesehen werden müssen, die bereits vor dem Abstellen des Containers auf der Ladefläche positioniert werden. Es ist in der Praxis nicht durchführbar, dass beim Beladen eines Containerzuges, das auf irgendeiner Nebenstrecke erfolgt, bereits derartige Adapterplatten auf den Waggon platziert werden. Damit ist aber ein Verladen im Zielbahnhof, der eben dieses vorgeschlagene mobile Umschlaggerät im Einsatz hat, nicht möglich, da der Container unmittelbar auf der Ladefläche aufsitzt und ein Unterfahren ausgeschlossen ist.

Weiters wurden auch stationäre Anlagen zum Umsetzen der Frachtcontainer bereits vorgeschlagen. Eine derartige stationäre Anlage ist beispielsweise aus der DE 198 04 491 A1 bekannt. Weiters ist noch aus der DE 43 01 019 C2 ein Umschlagsystem für den horizontalen Umschlag von Containern bekannt. Diese bekannten Anlagen und Systeme lösen jedoch die oben aufgezeigte Problematik in ihren Grundzügen nicht.

Aufgabe der Erfindung ist es, einen Umladesystem der eingangs genannten Art zu schaffen, das einerseits die obigen Nachteile vermeidet und das anderseits ein wirtschaftliches, also effizientes und kostengünstiges Um- bzw. Verladen von Ladeeinheiten ermöglicht, damit die Schwachstelle des Gütertransports beseitigt werden kann.

Die Aufgabe wird mit dem mobilen Umschlaggerät gemäß Anspruch 1 gelöst.

Mit der Erfindung ist es erstmals möglich, den Umladevorgang so zu vereinfachen, dass der Durchsatz, das heißt die pro Zeiteinheit umgeladenen Ladeeinheiten, in Containerhäfen ohne umfangreiche Zusatzinvestitionen deutlich zu steigern und damit die Umladekosten entsprechend zu senken. Das mobile Umschlaggerät wird auf Fahrgestelle, vorzugsweise "automatic guided vehicles" (AGV), positioniert und die von den Schiffsentladekränen vom Schiff gehobenen Ladeeinheiten darauf abgestellt. Mit den abgestellten Ladeeinheiten fahren die Fahrzeuge zu den Zügen bzw. den LKWs und können dort ohne Hebezeuge, also ohne Drehkräne, Straddlecarrier, Reachstacker oder dergleichen entladen werden. Das mobile Umschlaggerät ist so konzipiert, dass der Umladevorgang vollautomatisch, das heißt ohne Bedienungspersonal erfolgen kann. Außerdem können mehrere Umladevorgänge zur gleichen Zeit erfolgen, weil sich die Fahrzeuge mit dem mobilen Umschlaggerät nicht, wie bei den üblichen Hebezeugen, gegenseitig im Weg stehen.

Weiters gelingt es mit der Erfindung erstmals die langfristig angestrebte Entkopplung von Wirtschaftswachstum und Transportmenge zu realisieren, in dem der Hinterlandverkehr wesentlich effizienter abgewickelt werden kann.

Ferner bringt die Erfindung den wesentlichen Vorteil, dass der für eine bestimmte Durchsatzmenge erforderliche Platzbedarf, beispielsweise in Containerhäfen, drastisch reduziert wird.

Nach einem besonderen Merkmal der Erfindung ist die Verladeeinrichtung als Verladerahmen und/oder als Verladeplatte ausgebildet. Dadurch wird es möglich ohne aufwendiges Umrüsten mehrere Größen von Ladeeinheiten, wie etwa 20 Fuß - und 40 Fuß - Container problemlos umzuladen.

Gemäß der Erfindung ist der Grundrahmen auf der Grundplatte angeordnet. Dadurch ist sichergestellt, dass das mobile Umschlaggerät ohne Umbauten auf jedes Fahrgestell montiert werden kann. Das ist deshalb so wichtig, weil damit die bereits in den Containerhäfen vorhandenen Fahrzeuge, wie die "automatic guided vehicles" (AGV), problemlos genutzt werden können. Es müssen also keine neuen Fahrzeuge angeschafft oder die vorhandenen aufwendig umgebaut werden.

Nach einem weiteren Merkmal der Erfindung sind zwei Ausleger vorgesehen, die vorzugsweise im stirnseitigen Endbereich des Grundrahmens bzw. der Grundplatte vorgesehen sind. Das ermöglicht eine Verladeposition des Fahrzeuges mit dem mobilen Umschlaggerät parallel zur Fahrzeuglängsachse von Eisenbahnwaggon oder LKW und mit geringem Abstand zur neuen Ladefläche. Das heißt die Strecke, die die Ladeeinheit auf den Auslegern verschoben werden muss, ist kurz, so dass der Verschiebevorgang sehr einfach und in kurzer Zeit erfolgen kann. Dadurch ist das mobile Umschlaggerät schnell wieder einsatzbereit.

Gemäß einer Weiterbildung der Erfindung ist bzw. sind der bzw. die Ausleger im Inneren des Grundrahmens und gegebenenfalls auf der Grundplatte angeordnet. Damit wird ein einfacher Aufbau des mobilen Umschlaggerätes erreicht. Die Konstruktion kann gewichtssparend und billig gehalten werden. Das senkt die Anschaffungskosten und ermöglicht eine kostengünstige Serienfertigung. Auch Wartung und Reparatur des mobilen Umschlaggerätes wird dadurch vereinfacht und kostengünstiger.

Nach einer weiteren Ausgestaltung der Erfindung weist der Ausleger an der der Verladeeinrichtung zugewandten Seite Einrichtungen zum Verschieben der Ladeeinheit, wie beispielsweise Rollen, eine Rollenbahn oder Schienen, auf. Die voll beladenen Ladeeinheiten können bis zu 40 Tonnen wiegen. Diese Masse auch nur über kurze Strecken zu bewegen erfordert ohne Vorrichtungen zur Reduzierung der Reibung enorme Kräfte. Es ist daher ein großer Vorteil Rollen oder ähnliches vorzusehen, damit die schweren Ladeeinheiten problemlos und leicht hin- und herbewegt werden können.

Gemäß einem besonderen Merkmal der Erfindung ist die Verladeeinrichtung zum Grundrahmen bzw. zur Grundplatte, beispielsweise über hydraulische Stempel, höhenverstellbar. Das hat den Vorteil, dass bei Niveauunterschieden der Ladeflächen, das heißt bei unterschiedlichen Abständen der Ladeflächen vom Boden, eine Anpassung sehr einfach durchgeführt werden kann. Ein Umladen ist nur bei niveaugleichen Ladeflächen schnell und sicher möglich.

Nach einem besonderen Merkmal der Erfindung ist das mobile Umschlaggerät als automatisches, selbst fahrendes Fahrzeug ausgeführt. Damit wird der enorme Vorteil erreicht, dass die Fahrzeuge mit den mobilen Umschlaggeräten keine Fahrer benötigen. Auch der eigentliche Umladevorgang kann vollautomatisch ablaufen, sodass der gesamte Prozess vollautomatisch, also ohne Bedienpersonal auskommt. Dadurch ergibt sich ein enormes Einsparungspotential. Außerdem ist ein 24 - Stundeneinsatz problemlos möglich.

Gemäß einer Weiterbildung der Erfindung ist der Grundrahmen bzw. die Grundplatte auf dem Fahrgestell höhenverstellbar. Das bringt den Vorteil, dass das mobile Umschlaggerät auch bei anderen Umladevorgängen außerhalb von Containerhäfen einsetzbar ist. Es kann z. B. auch auf Eisenbahnwaggons und/oder LKW's zum Umladen von Ladeeinheiten ohne zusätzliche Hebezeuge eingesetzt werden. Eventuell dabei auftretende größere Niveauunterschiede werden dann durch eine zusätzliche Höhenverstellung ausgeglichen.

Nach einem besonderen Merkmal der Erfindung ist bzw. sind der bzw. die Ausleger in Bezug auf den Grundrahmen bzw. der Grundplatte höhenverstellbar angeordnet. Durch diese Ausgestaltung können eventuell auftretende größere Niveauunterschiede dann durch eine zusätzliche Höhenverstellung ausgeglichen werden.

Gemäß einem weiteren besonderen Merkmal der Erfindung ist bzw. sind der bzw. die Ausleger im Grundrahmen oder auf der Grundplatte drehbar angeordnet. Dadurch ergibt sich der Vorteil, dass auch etwas größere Distanzen zwischen dem mobilen Umschlaggerät und der Ladefläche von Eisenbahnwaggons und/oder LKW's überbrückt werden können. Damit die Teleskopkonstruktion bei größeren Auszugslängen nicht zu voluminös bzw. massiv wird, ist vorgesehen, dass die Ausleger zusätzlich drehbar angeordnet sind. Sie können neben dem teleskopartigen Ausfahren zusätzlich aus- und eingeschwenkt werden.

Nach einer Weiterbildung der Erfindung ist im Bereich der Ausleger in ihrer Arbeitsstellung zur Abstützung mindestens ein Abstützelement vorgesehen. Die Ausleger übernehmen das Gewicht der Ladeeinheit während des Verschiebevorganges. Durch das Abstützen der Ausleger in Arbeitsstellung ergibt sich der große Vorteil, dass das gesamte Gewicht von der Abstützung aufgenommen wird und nicht über die Hydraulik geleitet wird. Dadurch kann die Hydraulik kleiner dimensioniert werden, was erhebliche kosten einspart. Außerdem ergibt sich ein großer Sicherheitsgewinn, weil im Störfall, wenn etwa die Hydraulik ausfällt, die Ladeeinheit auch über längere Zeit in Position gehalten werden kann und nicht zu Boden stürzt.

Gemäß einer Ausgestaltung der Erfindung ist das Abstützelement höhenverstellbar. Daraus resultiert der Vorteil eines zusätzlichen Sicherheitsaspektes. Sowohl im Betrieb als auch bei bestimmten Störfällen bringt das Anheben der Abstützung zusätzliche Sicherheit. Außerdem ist es besser, wenn die Ausleger angehoben werden, dass auch die Abstützung höhenverstellbar ist.

Die Erfindung wird an Hand von Ausführungsbeispielen, die in der Zeichnung dargestellt sind, näher erläutert.

Es zeigen:
Fig. 1 eine Schrägansicht eines mobilen Umschlaggerätes mit einer Ladeeinheit,
Fig. 2 das mobile Umschlaggerät ohne einer Verladeeinrichtung neben einem Eisenbahnwaggon,
Fig. 3 das mobile Umschlaggerät mit ausgefahrenen Auslegern,
Fig. 4 das mobile Umschlaggerät neben einem Eisenbahnwaggon im Zeitpunkt der Verladung einer Ladeeinheit und
Fig. 5 eine Prinzipskizze des Verladevorganges.

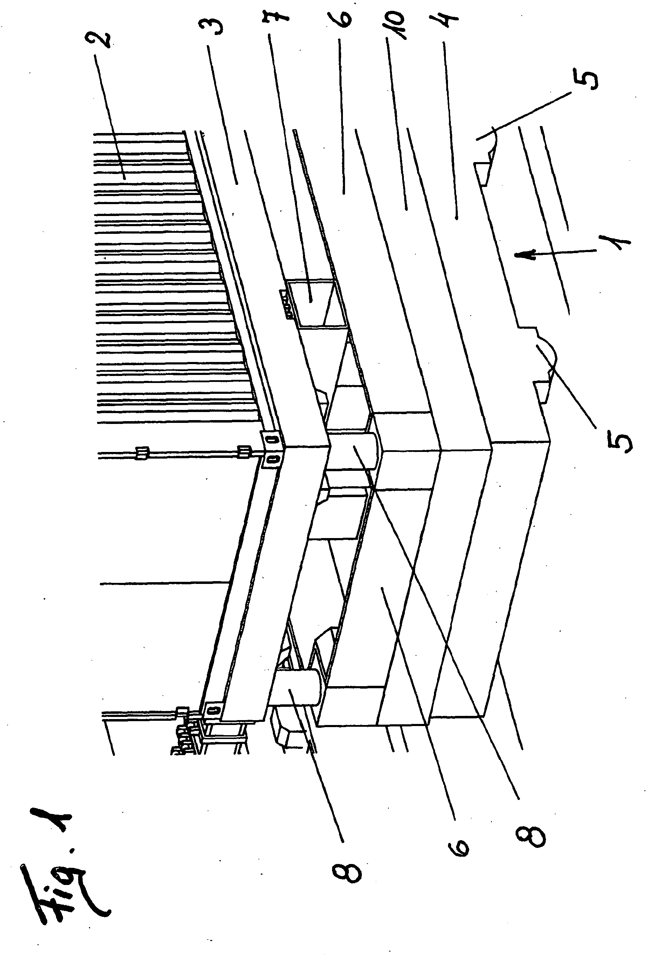

Gemäß der Fig. 1 ist ein mobiles Umschlaggerät 1 mit einer Ladeeinheit 2, im dargestellten Fall ein Container, gezeigt. Dieses mobile Umschlaggerät 1 dient zum längsseitigen Um- und/oder Verladen der Ladeeinheit 2, wobei die Um- bzw. Verladebewegung der Ladeeinheit 2 über eine, unter der Ladeeinheit 2 positionierbare, bewegbare Verladeeinrichtung 3 erfolgt. Natürlich kann die Ladeeinheit 2 auch eine Wechselbrücke oder ein anders gestalteter Behälter sein. Das mobile Umschlaggerät 1 besteht in der Basisausstattung zumindest aus einem Fahrgestell 4 mit Rädern 5. Es kann als selbst fahrendes, automatisch geführtes Fahrzeug, also als so genanntes "Automatic Guided Vehicle (AGV)" konzipiert sein. Ebenso könnte es als Anhänger mit einer Zugmaschine ausgeführt werden.

Die Verladeeinrichtung 3 ist als Verladeplatte ausgebildet und entspricht mindestens der Grundfläche der Ladeeinheit 2. Ebenso könnte die Verladeeinrichtung 3 auch als Verladerahmen konstruiert sein. In Transport- bzw. Ruhestellung ist die Verladeeinrichtung 3 über einem Grundrahmen 6 angeordnet, wobei dieser Grundrahmen 6 auf der der Ladefläche abgewandten Seite der Verladeeinrichtung 3, vorgesehenen ist. Der Grundrahmen 6 ist auf einer Grundplatte 10 aufgesetzt. Eine weitere Alternative könnte sein, dass nur der Grundrahmen 6, beispielsweise direkt am Fahrgestell 4, vorgesehen ist. Vorzugsweise wird man die Verladeeinrichtung 3 in ihrer Ausführung als Grundplatte relativ dünn und äußerst steif ausführen. Ein weiteres Augenmerk wird man auf die Gewichtsfrage legen und die Verladeeinrichtung 3 sehr leicht ausführen.

Natürlich kann die Verladeeinrichtung 3 für Sicherungszwecke der Ladeeinheit 2 Zapfen oder dergleichen aufweisen.

Zwischen der Verladeeinrichtung 3 und dem Grundrahmen 6 bzw. der Grundplatte 10 ist mindestens ein Ausleger 7 vorgesehen, der am Grundrahmen 6 bzw. auf der Grundplatte 10 angeordnet ist. Der Ausleger 7 ist teleskopartig, senkrecht zur Längsseite der Ladeeinheit 2, verlängerbar. Um eine bessere Stabilität beim Um- bzw. Verladevorgang zu erreichen, werden zwei Ausleger 7 vorgesehen. Diese Ausleger 7 sind im Inneren des Grundrahmens 6 und gegebenenfalls auf der Grundplatte 10 angeordnet und im stirnseitigen Endbereich des Grundrahmens 6 bzw. der Grundplatte 10 vorgesehen. Wie später noch eingehender aufgezeigt wird, ist die Verladeeinrichtung 3 auf dem Ausleger 7 in dessen Längserstreckung über einen Antrieb bewegbar.

Die Verladeeinrichtung 3 ist zum Grundrahmen 6 bzw. zur Grundplatte 10 über hydraulische Stempel 8 höhenverstellbar. Dies dient vor allem dazu, dass bei Niveauunterschieden der Ladeflächen, das heißt bei unterschiedlichen Abständen der Ladeflächen vom Boden, eine Anpassung sehr einfach durchgeführt werden kann.

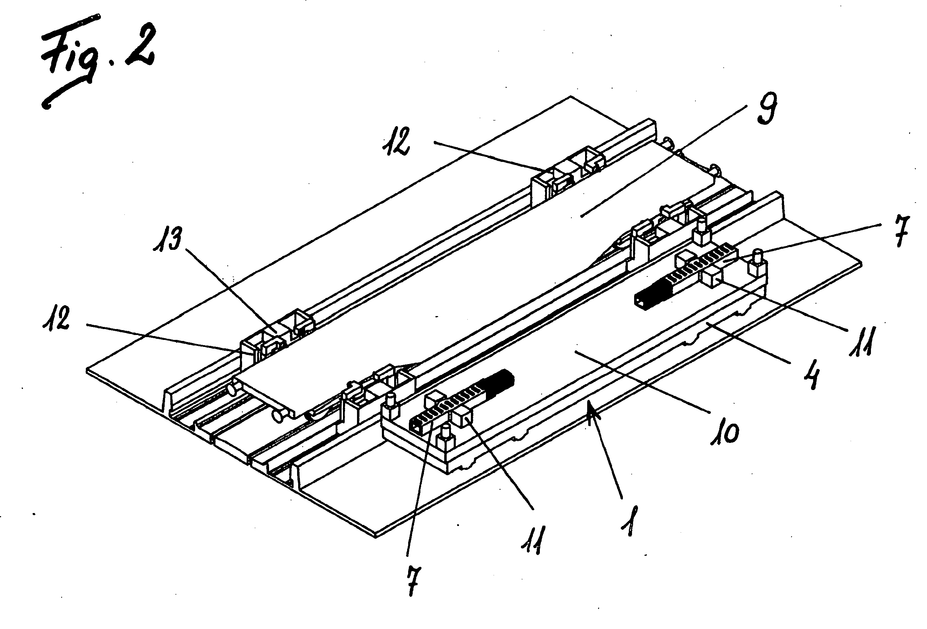

Gemäß der Fig. 2 ist das mobile Umschlaggerät 1 ohne Verladeeinrichtung 3 und ohne Ladeeinheit 2 neben einem Eisenbahnwaggon 9 gezeigt. Statt des Eisenbahnwaggons 9 ist natürlich auch ein Lastkraftwagen denkbar. Das mobile Umschlaggerät 1 weist auf seinem Fahrgestell 4 die Grundplatte 10 auf. Auf dieser Grundplatte 10 sind die Ausleger 7 vorgesehen. Die Ausleger 7 sind höhenverstellbar bzw. sind über beispielsweise hydraulische oder pneumatische Einrichtungen in der Z-Richtung verstellbar. Die Ausleger 7 sind auf der Grundplatte 10 drehbar angeordnet und werden zum Verladevorgang um 90° in Richtung zum Eisenbahnwaggon 9 gedreht. Um beim Verladevorgang die auftretenden Kräfte besser aufnehmen zu können, sind in Verladestellung der Ausleger 7 Abstützelemente 11 vorgesehen. Die Ausleger 7 stützen sich im Verladevorgang auf diesen Abstützelementen 11 ab.

Um beim Verladevorgang eine noch bessere Kraftverteilung zu erreichen, sind - wie später näher beschrieben - seitlich neben dem Eisenbahnwaggon 9 Verladehilfseinrichtungen 12 vorgesehen. Diese Verladehilfseinrichtungen 12 weisen, neben weiteren Funktionseinrichtungen, ein Gegenlager 13 für die Abstützung des ausgefahrenen und in Verladeposition befindlichen Auslegers 7 auf.

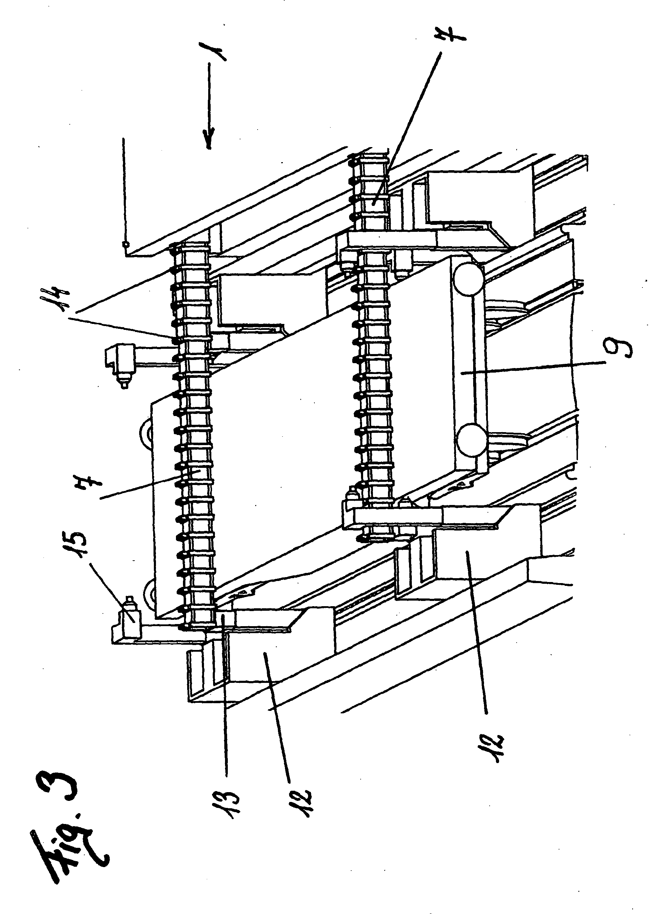

Gemäß der Fig. 3 ist das mobile Umschlaggerät 1 mit ausgefahrenen Auslegern 7 über den Eisenbahnwaggon 9 gezeigt. Seitlich neben dem Eisenbahnwaggon 9 sind die Verladehilfseinrichtungen 12 vorgesehen.

Die Ausleger 7 sind um 90° aus ihrer Ruhe- bzw. Transportstellung in ihre Verladestellung gedreht und im ausgefahrenen Zustand. Wie bereits erwähnt, stützen sich die ausgefahrenen Ausleger 7 in Gegenlager 13 der Verladehilfseinrichtungen 12 ab. Um die Verladeeinrichtung 3 auf den Auslegern 7 leichter, d. h. reibungsvermindernd, bewegen zu können, weisen die Ausleger 7 in Querrichtung drehbar gelagerte Rollen 14 auf. Diese Rollen 14 können über ein flexibles Band miteinander verbunden sein, so dass sie ziehharmonikaartig beim Ausfahren der Ausleger 7 im Abstand voneinander platziert werden. Natürlich könnten auch zur Reibungsverminderung Schienen oder dergleichen Verwendung finden.

Eine bereits oben angesprochene weitere Funktion der Verladehilfseinrichtungen 12 besteht darin, dass die Ladeeinheit 2 zu ihrer Verladung auf oder vom Eisenbahnwaggon 9 angehoben bzw. gesenkt werden muss. Für diesen Vorgang weist die Verladehilfseinrichtung 12 eine Hebe- und Senkeinrichtung 15 auf, die zur ladeflächennahen Lastaufnahme der Ladeeinheit 2 dient.

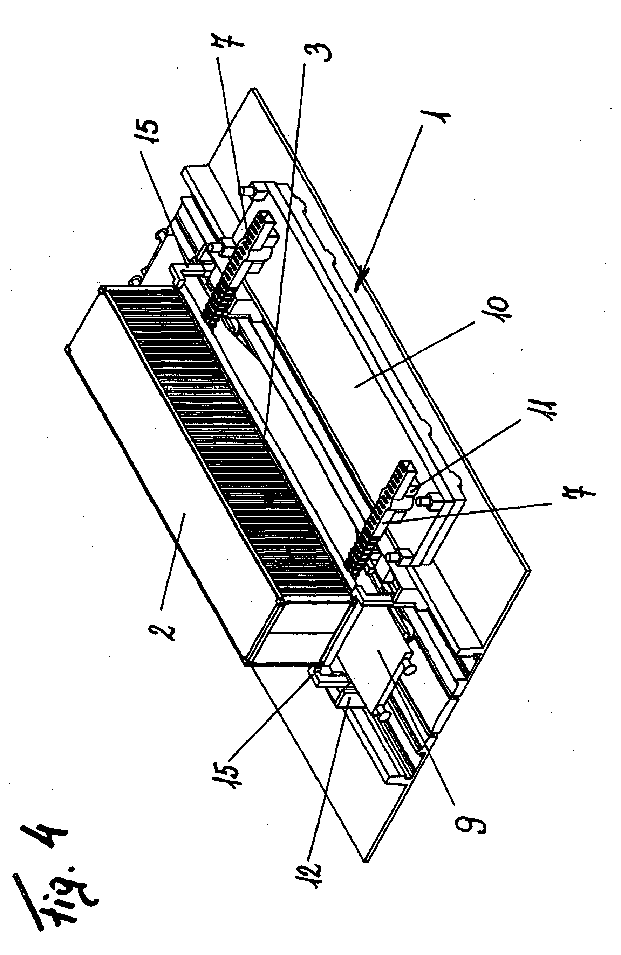

Gemäß der Fig. 4 ist das mobile Umschlaggerät 1 neben einem Eisenbahnwaggon 9 im Zeitpunkt der Verladung einer Ladeeinheit 2 gezeigt. Das mobile Umschlaggerät 1 steht parallel zum Eisenbahnwaggon 9 und die Ausleger 7 sind in Verladestellung ausgefahren und stützen sich einerseits auf den Abstützelementen 11 und anderseits im Gegenlager 13 der Verladehilfseinrichtung 12 ab. Die Ladeeinheit 2 ist auf der Verladeeinrichtung 3 positioniert und wird über die Ausleger 7 verladen. Wie bereits kurz erwähnt, ist die Verladeeinrichtung 3 über einen - nicht dargestellten - Antrieb auf den Auslegern 7 bewegbar.

Zum Anheben und Absenken der Ladeeinheit 2 über dem Eisenbahnwaggon 9 sind die Hebe- und Senkeinrichtungen 15 der Verladehilfseinrichtungen 12 vorgesehen.

Um einen gegebenenfalls notwendigen Niveauausgleich zur Verladung der Ladeeinheit 2 schaffen zu können, sind einerseits die Verladeeinrichtung 3 zur Grundplatte 10 bzw. zum Grundrahmen 6 und anderseits die Ausleger 7 bzw. die Abstützelemente 11 höhenverstellbar ausgeführt. Natürlich könnte auch der Grundrahmen 6 bzw. die Grundplatte 10 zum Fahrgestell 4 höhenverstellbar sein.

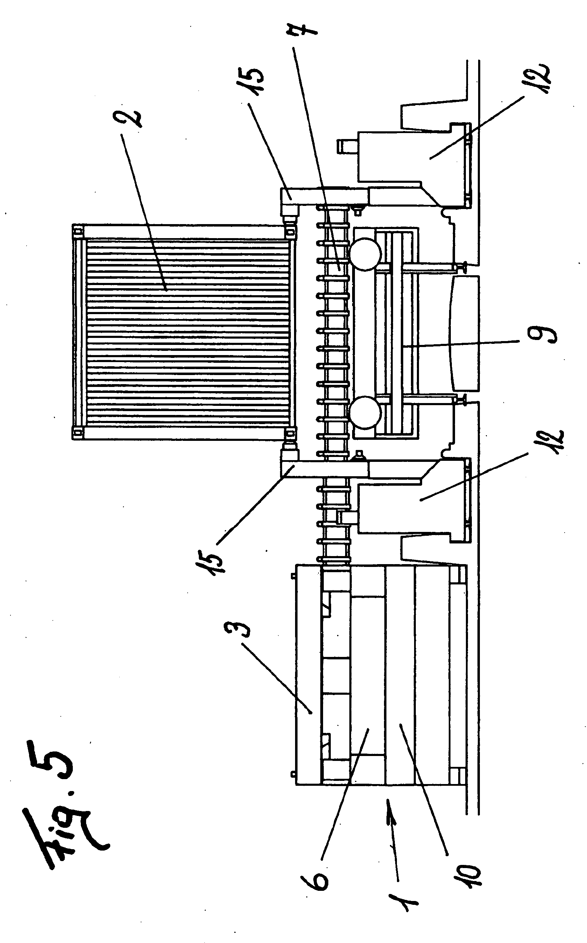

Anhand der Fig. 5 wird in einer Prinzipskizze der Verladevorgang zusammenfassend näher erläutert.

Um das in Rede stehende Umladesystem wirklich effizient nützen zu können, wird spätestens im Stillstand des Zuges bzw. Fahrzeuges in seiner Verladeposition über ein - nicht dargestelltes - Erkennungssystem die Position der Ladeeinheiten 2 am Eisenbahnwaggon 9 erfasst. Weiters wird über das Erkennungssystem mindestens eine, vorzugsweise eine selbstfahrende, Verladehilfseinrichtung 12 im Bereich der zu verladenden Ladeeinheit 2 positioniert. Über ein Erkennungsorgan wird die Lastaufnahmefläche der Ladeeinheit 2 zur Verladung erfasst. Es wird eine formschlüssige Verbindung zwischen einer Hebe- und Senkeinrichtung 15 mit einer, vorzugsweise ladeflächennahen, Lastaufnahmefläche der Ladeeinheit 2 hergestellt. Die Hebe- und Senkeinrichtung 15 hebt die Ladeeinheit 2 in z-Richtung an. Die Ausleger 7 werden auf die entsprechende Höhe angehoben und um 90° gedreht. Danach werden die Ausleger 7 des mobilen Umschlaggerätes 1 in x-Richtung aus der Ruhe- bzw. Transportstellung unter die Ladeeinheit 2 ausgefahren und zur Abstützung in den Gegenlagern 13 positioniert. Die Verladeeinrichtung 3 wird auf den Auslegern 7 unter die Ladeeinheit 2 bewegt. Die Hebe- und Senkeinrichtung 15 senkt die Ladeeinheit 2 in z-Richtung auf die Verladeeinrichtung 3 ab. Die Ladeeinheit 2 wird in x-Richtung mit der Verladeeinrichtung 3 in die neue Position bewegt. Der Ausleger 7 wird in seine Bereitschaftsstellung eingefahren.

Sinngemäß erfolgt eine Verladung vom mobilen Umschlaggerät 1 auf den Eisenbahnwaggon 9 oder einen LKW.

Abschließend sei der Ordnung halber darauf hingewiesen, dass in der Zeichnung einzelne Bauteile und Baugruppen zum besseren Verständnis der Erfindung unproportional und maßstäblich verzerrt dargestellt sind.

## Patentansprüche

1. Mobiles Umschlaggerät (1) zum längsseitigen Um- und/oder Verladen einer Ladeeinheit (2), insbesondere eines Containers oder einer Wechselbrücke, wobei die Um- bzw. Verladebewegung der Ladeeinheit über mindestens eine, unter der Ladeeinheit positionierbare, bewegbare Platte erfolgt, die auf einem teleskopartig, senkrecht zur Längsseite der Ladeeinheit, verlängerbaren, Ausleger vorgesehen ist, der auf einer Grundplatte angeordnet ist und die Platte in der Längserstreckung des Auslegers über einen Antrieb bewegbar ist, **dadurch gekennzeichnet, dass** die Platte mindestens der Grundfläche der Ladeeinheit (2) entspricht und als Verladeeinrichtung (3), die auf mindestens zwei Auslegern (7) aufliegt, ausgebildet ist und in Transport- bzw. Ruhestellung über einem, auf der der Ladefläche abgewandten Seite der Verladeeinrichtung (3), vorgesehenen Grundrahmen (6) angeordnet ist und dass der Grundrahmen (6) auf der Grundplatte (10) angeordnet ist.

2. Mobiles Umschlaggerät nach Anspruch 1, **dadurch gekennzeichnet, dass** in an sich bekannter Weise zwei Ausleger (7) vorgesehen sind, die vorzugsweise im stirnseitigen Endbereich des Grundrahmens (6) bzw. der Grundplatte (10) vorgesehen sind.

3. Mobiles Umschlaggerät nach Anspruch 1 oder 2, **dadurch gekennzeichnet, dass** die Ausleger (7) im Inneren des Grundrahmens (6) und auf der Grundplatte (10) angeordnet sind.

4. Mobiles Umschlaggerät nach einem der vorhergehenden Ansprüche 1 bis 3, **dadurch gekennzeichnet, dass** in an sich bekannter Weise der Ausleger (7) an der der Verladeeinrichtung (3) zugewandten Seite Einrichtungen zum Verschieben der Ladeeinheit (2), wie beispielsweise Rollen (14), eine Rollenbahn oder Schienen, aufweist.

5. Mobiles Umschlaggerät nach einem der vorhergehenden Ansprüche 1 bis 4, **dadurch gekennzeichnet, dass** die Verladeeinrichtung (3) zum Grundrahmen (6) bzw. zur Grundplatte, beispielsweise über hydraulische Stempel (8), höhenverstellbar ist.

6. Mobiles Umschlaggerät nach einem der vorhergehenden Ansprüche 1 bis 5, **dadurch gekennzeichnet, dass** es in an sich bekannter Weise als automatisches, selbst fahrendes Fahrzeug ausgeführt ist.

7. Mobiles Umschlaggerät nach einem der vorhergehenden Ansprüche 1 bis 6, **dadurch gekennzeichnet, dass** der Grundrahmen (6) bzw. die Grundplatte (10) auf dem Fahrgestell (4) höhenverstellbar ist.

8. Mobiles Umschlaggerät nach einem der vorhergehenden Ansprüche 1 bis 7, **dadurch gekennzeichnet, dass** die Ausleger (7) in Bezug auf den Grundrahmen (6) bzw. der Grundplatte (10) höhenverstellbar angeordnet sind.

9. Mobiles Umschlaggerät nach einem der vorhergehenden Ansprüche 1 bis 8. **dadurch gekennzeichnet, dass** der bzw. die Ausleger (7) im Grundrahmen (6) oder auf der Grundplatte (10) drehbar angeordnet ist bzw. sind.

10. Mobiles Umschlaggerät nach einem der vorhergehenden Ansprüche 1 bis 9. **dadurch gekennzeichnet, dass** im Bereich der Ausleger (7) in ihrer Arbeitsstellung zur Abstützung mindestens ein Abstützelement (11) vorgesehen ist.

11. Mobiles Umschlaggerät nach einem der vorhergehenden Ansprüche 1 bis 10, **dadurch gekennzeichnet, dass** das Abstützelement (11) höhenverstellbar ist.

## Claims

1. Mobile handling device (1) for transferring and/or loading a loading unit (2), in particular a container or an interchangeable bridge, whereby the loading unit is transferred and/or loaded via at least one moveable plate which can be positioned beneath the loading unit, and which is provided on an extension arm which can be extended telescopically in a direction perpendicular to the longitudinal side of the loading unit, and which is arranged on a base plate, and the plate can be moved along the longitudinal extent of the extension arm via a drive, **characterised by** the fact that the plate corresponds at least to the surface area of the loading unit (2) and that it is designed as a loading arrangement (3) which is supported by at least two extension arms (7), and which, in the transporting and rest positions, is arranged above a base frame (6) provided on that side of the loading arrangement (3) which is directed away from the loading surface, and that the base frame (6) is arranged on the base plate (10).

2. Mobile handling device in accordance with Claim 1, **characterised by** the fact that two extension arms (7) are provided in a known manner, which are preferably provided at the front side end section of the base frame (6) and/or the base plate (10).

3. Mobile handling device in accordance with Claim 1 or 2, **characterised by** the fact that the extension arms (7) are arranged on the inside of the base frame (6) and on the base plate (10).

4. Mobile handling device in accordance with one of the preceding Claims 1 to 3, **characterised by** the fact that the extension arm (7) is provided with facilities for displacement of the loading unit (2) on the side which is directed towards the loading arrangement (3) in a known manner, such as for example rolls (14), a roller path or rails.

5. Mobile handling device in accordance with one of the preceding Claims 1 to 4, **characterised by** the fact that the loading arrangement (3) can be adjusted in height to the base frame (6) and/or the base plate, for example using hydraulic jacks (8).

6. Mobile handling device in accordance with one of the preceding Claims 1 to 5, **characterised by** the fact that it is designed as an automatic, self-propelled vehicle in a known manner.

7. Mobile handling device in accordance with one of the preceding Claims 1 to 6, **characterised by** the fact that the base frame (6) and/or the base plate (10) is height-adjustable on the undercarriage (4).

8. Mobile handling device in accordance with one of the preceding Claims 1 to 7, **characterised by** the fact that the extension arms (7) are arranged in a height-adjustable manner in relation to the base frame (6) and/or the base plate (10).

9. Mobile handling device in accordance with one of the preceding Claims 1 to 8, **characterised by** the fact that the extension arm or arms (7) is or are arranged in a revolving manner within the base frame (6) or on the base plate (10).

10. Mobile handling device in accordance with one of the preceding Claims 1 to 9, **characterised by** the fact that at least one supporting element (11) is provided as a support in the area of the extension arms (7) when these are in the operating position.

11. Mobile handling device in accordance with one of the preceding Claims 1 to 10, **characterised by** the fact that the supporting element (11) is adjustable in height.

## Revendications

1. Equipement mobile de transbordement (1) permettant le transbordement et/ou le chargement d'une unité de chargement (2) de son côté long, dont notamment des conteneurs ou des caisses mobiles, le mouvement de transbordement ou de chargement de l'unité de chargement étant effectué par au moins une plateforme mobile qui peut être placée sous l'unité de charge et s'appuie sur un bras télescopique, à longueur variable, en position verticale par rapport au côté long de l'unité de charge. Ce bras repose sur une plaque de base qui est entraînée par voie mécanique dans l'axe de l'allongement longitudinal du bras et est **caractérisé par le fait que** la surface de la plaque correspond au moins à celle de la base de l'unité de chargement (2), et que cette plaque fonctionne comme unité de chargement (3) s'appuyant sur au moins deux bras (7), et qu'en position de transport ou en position d'arrêt, elle est disposée au-dessus d'un cadre porteur (6) situé, lui, du côté de l'unité de chargement (3) non donnant sur la surface de chargement. Ce cadre porteur (6) est situé sur la plaque de base.

2. Equipement mobile de transbordement selon la revendication 1, **caractérisé par le fait que** deux bras (7) sont prévus comme d'habitude, lesquels sont de préférence montés au front du cadre porteur (6) et de la plaque de base (10).

3. Equipement mobile de transbordement selon les revendications 1 ou 2, **caractérisé par le fait que** les deux bras (7) sont disposés à l'intérieur du cadre porteur (6) et sur la plaque de base (10).

4. Equipement mobile de transbordement selon l'une des revendications 1 à 3, **caractérisé par le fait que** le bras (7) est équipé comme d'habitude, de dispositifs, par exemple de rouleaux (14), d'un transporteur ou de rails permettant le déplacement de l'unité de chargement (2), lesquels dispositifs se trouvent du côté donnant sur l'unité de chargement (3).

5. Equipement mobile de transbordement selon l'une des revendications 1 à 4, **caractérisé par le fait que** l'unité de transbordement (3) est réglable en hauteur par rapport au cadre porteur (6), à la plaque de base, par exemple au moyen d'un cylindre hydraulique (8).

6. Equipement mobile de transbordement selon l'une des revendications 1 à 5, **caractérisé par le fait qu'**il adopte la forme par ailleurs connue d'un véhicule automatique, autonome.

7. Equipement mobile de transbordement selon l'une des revendications 1 à 6, **caractérisé par le fait que** le cadre porteur (6) ou la plaque de base (10) sur le châssis (4) est réglable en hauteur.

8. Equipement mobile de transbordement selon l'une des revendications 1 à 7, **caractérisé par le fait que** le bras(7) est réglable en hauteur par rapport au cadre porteur (6) ou à la plaque de base (10).

9. Equipement mobile de transbordement selon l'une des revendications 1 à 8, **caractérisé par le fait que** le bras ou les bras (7) sont montés sur le cadre porteur (6) ou sur la plaque de base (10) de sorte qu'ils pivotent.

10. Equipement mobile de transbordement selon l'une des revendications 1 à 9, **caractérisé par le fait qu'**au moins un élément de support (11) est prévu pour appuyer les bras (7) pendant leur opération.

11. Equipement mobile de transbordement selon l'une des revendications 1 à 10, **caractérisé par le fait que** l'élément de support (11) est réglable en hauteur.
